# EUROPEAN PATENT APPLICATION

(11) **EP 4 782 502 A1**
(43) Date of publication of application: **29.07.2026**
(21) Application number: 24868563.8
(22) Date of filing: 10.09.2024
(51) Int. Cl.: C08L 69/00, C08L 55/02, C08L 25/12

(54) **THERMOPLASTIC RESIN COMPOSITION AND ARTICLE PRODUCED THEREFROM**

(30) Priority: 22.09.2023 KR 20230126889
(71) Applicant: LOTTE CHEMICAL CORPORATION, Seoul 05551 (KR)
(72) Inventor: SHIN, Ye Seul, Uiwiang-si Gyeonggi-do 16073 (KR); CHOI, Dong Kil, Uiwiang-si Gyeonggi-do 16073 (KR); KANG, Tae Gon, Uiwiang-si Gyeonggi-do 16073 (KR); JEONG, Da Heen, Uiwiang-si Gyeonggi-do 16073 (KR)
(74) Representative: Germain Maureau
(86) International application number: PCT/KR2024/013671
(87) International publication number: WO 2025/063585

(57) **Abstract**

A thermoplastic resin composition according to the present invention is characterized by comprising: about 100 parts by weight of a polycarbonate resin; about 0.1 to about 4 parts by weight of a rubber-modified vinyl-based graft copolymer; and about 0.5 to about 4.5 parts by weight of an aromatic vinyl-vinyl cyanide copolymer resin having a weight average molecular weight of about 200,000 to about 400,000 g/mol, wherein the flexural strength of a 100 mm x 100 mm x 1.5 mm specimen, as measured under the condition of 2 mm/min according to ISO 178 after coating the specimen with 0.5 g of acetic acid, is about 280 to about 600 MPa. The thermoplastic resin composition has excellent chemical resistance (acetic acid stress resistance), impact resistance, rigidity, insulating properties, flame retardancy, fluidity, and the like.

## Description

### [Technical Field]

The present invention relates to a thermoplastic resin composition and a molded article produced therefrom. More particularly, the present invention relates to a thermoplastic resin composition having good properties in terms of chemical resistance (acetic acid stress resistance), impact resistance, rigidity, insulating characteristics, flame retardancy, flowability, and the like, and a molded article produced therefrom.

### [Background Art]

As engineering plastics, polycarbonate resins have good properties in terms of mechanical properties including impact resistance, dimensional stability, weather resistance, and the like, and are transparent. In addition, the polycarbonate resins can impart or enhance various properties, such as flame retardancy, heat resistance, and the like, when mixed with various types of resins.

Since typical high-temperature resistant polycarbonate resin compositions have functional groups similar to acetic acid, single molecules of acetic acid can penetrate the polycarbonate chains and cause cracking when the polycarbonate resins are exposed to an acetic acid-containing solution (weak acidic solution that might be encountered during processing or in consumer environments).

Therefore, there is a need for development of a thermoplastic resin composition that has good properties in terms of chemical resistance (acetic acid stress resistance), impact resistance, rigidity, insulating characteristics, flame retardancy, flowability, property balance therebetween, and the like.

The background art of the present invention is disclosed in Korean Patent Registration No. 10-2018714 and the like.

### [Disclosure]

### [Technical Problem]

It is one object of the present invention to provide a thermoplastic resin composition having good properties in terms of chemical resistance (acetic acid stress resistance), impact resistance, rigidity, insulating characteristics, flame retardancy, flowability, and the like.

It is another object of the present invention to provide a molded article produced from the thermoplastic resin composition.

The above and other objects of the present invention will become apparent from the detailed description of the following embodiments.

### [Technical Solution]

1. One aspect of the present invention relates to a thermoplastic resin composition. The thermoplastic resin composition comprises: about 100 parts by weight of a polycarbonate resin; about 0.1 parts by weight to about 4 parts by weight of a rubber-modified vinyl graft copolymer; and about 0.5 parts by weight to about 4.5 parts by weight of an aromatic vinyl-vinyl cyanide copolymer resin having a weight average molecular weight of about 200,000 g/mol to about 400,000 g/mol, wherein the thermoplastic resin composition has a flexural strength of about 280 MPa to about 600 MPa, as measured on a specimen having a size of 100 mm × 100 mm × 1.5 mm at 2 mm/min in accordance with ISO 178 after deposition of 0.5 g of acetic acid onto the specimen.
2. In embodiment 1, the polycarbonate resin may have a weight average molecular weight of about 10,000 g/mol to about 50,000 g/mol.
3. In embodiment 1 or 2, the rubber-modified vinyl graft copolymer may be prepared through graft polymerization of a monomer mixture comprising an aromatic vinyl monomer and a vinyl cyanide monomer to a rubber polymer.
4. In embodiments 1 to 3, the aromatic vinyl-vinyl cyanide copolymer resin may be a polymer of a monomer mixture comprising about 60 wt% to about 90 wt% of an aromatic vinyl monomer and about 10 wt% to about 40 wt% of a vinyl cyanide monomer.
5. In embodiments 1 to 4, the rubber-modified vinyl graft copolymer and the aromatic vinyl-vinyl cyanide copolymer resin may be present in a weight ratio of about 1:0.5 to about 1:3.
6. In embodiments 1 to 5, the thermoplastic resin composition may have a notched Izod impact strength of about 65 kgf·cm/cm to about 90 kgf·cm/cm, as measured on a 1/8" thick specimen in accordance with ASTM D256.
7. In embodiments 1 to 6, the thermoplastic resin composition may have a tensile strength of about 600 MPa to about 700 MPa, as measured on a 4 mm thick specimen at 50 mm/min in accordance with ISO 527.
8. In embodiments 1 to 7, the thermoplastic resin composition may have a flexural strength of about 850 MPa to about 950 MPa, as measured on a 4 mm thick specimen at 2 mm/min in accordance with ISO 178.
9. In embodiments 1 to 8, the thermoplastic resin composition may have a flexural modulus of about 20,000 MPa to about 25,000 MPa, as measured on a 4 mm thick specimen at 2 mm/min in accordance with ISO 178.
10. In embodiments 1 to 9, the thermoplastic resin composition may have a glow wire flammability index (GWFI) of about 790°C to about 900°C, as measured on a 1.5 mm thick specimen at 850°C in accordance with UL746A.
11. In embodiments 1 to 10, the thermoplastic resin composition may have a flame retardancy of V-2 or higher, as measured on a 3 mm thick specimen in accordance with a UL-94 vertical test method.
12. In embodiments 1 to 11, the thermoplastic resin composition may have a melt-flow index (MI) of about 15 g/10 min to about 25 g/10 min, as measured at 300°C under a load of 1.2 kgf in accordance with ISO 1133.
13. Another aspect of the present invention relates to a molded article. The molded article is produced from a thermoplastic resin composition according to any one of embodiments 1 to 12.

### [Advantageous Effects]

Embodiments of the present invention provide a thermoplastic resin composition having good properties in terms of chemical resistance (acetic acid stress resistance), impact resistance, rigidity, insulating characteristics, flame retardancy, flowability, and the like, and a molded article produced therefrom.

### [Best Mode]

Hereinafter, embodiments of the present invention will be described in detail.

A thermoplastic resin composition according to the present invention includes (A) a polycarbonate resin; (B) a rubber-modified vinyl graft copolymer; and (C) an aromatic vinyl-vinyl cyanide copolymer resin having a weight average molecular weight of about 200,000 g/mol to about 400,000 g/mol.

As used herein to represent a specific numerical range, "a to b" is defined as "≥a and ≤b".

### (A) Polycarbonate resin

The polycarbonate resin according to one embodiment of the invention may include a polycarbonate resin used in typical thermoplastic resin compositions. For example, the polycarbonate resin may be an aromatic polycarbonate resin prepared by reacting diphenols (aromatic diol compounds) with a carbonate precursor, such as phosgene, halogen formate, or carbonate diester.

In some embodiments, the diphenols may include, for example, 4,4'- biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, and the like, without being limited thereto. For example, the diphenols may include 2,2-bis(4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, or 1,1-bis(4-hydroxyphenyl)cyclohexane, specifically 2,2-bis(4-hydroxyphenyl)propane, which is also referred to as bisphenol-A.

In some embodiments, the carbonate precursors may include dimethylcarbonate, diethylcarbonate, dibutylcarbonate, dicyclohexylcarbonate, diphenylcarbonate, ditolylcarbonate, bis(chlorophenyl)carbonate, m-cresylcarbonate, dinaphthylcarbonate, carbonyl chloride (phosgene), diphosgene, triphosgene, carbonyl bromide, bishaloformate, and the like. These may be used alone or as a mixture thereof.

In some embodiments, the polycarbonate resin may be a branched polycarbonate resin. For example, the polycarbonate resin may be a polycarbonate resin prepared by adding a tri- or higher polyfunctional compound, specifically a tri- or higher valent phenol group-containing compound, in an amount of about 0.05 mol% to about 2 mol% based on the total number of moles of the diphenols used in polymerization.

In some embodiments, the polycarbonate resin may be a homopolycarbonate resin, a copolycarbonate resin, or a blend thereof. In addition, the polycarbonate resin may be partially or completely replaced by an aromatic polyester-carbonate resin prepared by polymerization in the presence of an ester precursor, for example, a bifunctional carboxylic acid.

In some embodiments, the polycarbonate resin may have a weight average molecular weight (Mw) of about 10,000 g/mol to about 50,000 g/mol, for example, about 15,000 g/mol to about 40,000 g/mol, as measured by gel permeation chromatography (GPC). Within this range, the thermoplastic resin composition can have good impact resistance, flowability, and the like.

In some embodiments, the polycarbonate resin may have a melt-flow index (MI) of about 2 g/10 min to about 30 g/10 min, as measured at 300°C under a load of 1.2 kgf in accordance with ISO 1133. Further, the polycarbonate resin may be a mixture of two or more polycarbonate resins having different melt-flow indexes.

### (B) Rubber-modified vinyl graft copolymer

The rubber-modified vinyl graft copolymer according to one embodiment of the invention may be applied to the polycarbonate resin together with the aromatic vinyl-vinyl cyanide copolymer resin having a certain weight average molecular weight range to improve properties of the thermoplastic resin composition, such as chemical resistance (acetic acid stress resistance), impact resistance, rigidity, insulating characteristics, flame retardancy, flowability, and the like. The rubber-modified vinyl graft copolymer is prepared through graft polymerization of a monomer mixture comprising an aromatic vinyl monomer and a vinyl cyanide monomer to a rubber polymer. For example, the rubber-modified vinyl graft copolymer may be prepared through graft polymerization of a monomer mixture comprising an aromatic vinyl monomer and a vinyl cyanide monomer to a rubber polymer, in which the monomer mixture may further comprise a monomer for imparting processability and heat resistance, as needed. Here, polymerization may be performed by any polymerization method known in the art, such as bulk polymerization, emulsion polymerization, suspension polymerization, and the like. Furthermore, the rubber-modified vinyl graft copolymer may form a core (rubber polymer)-shell (copolymer of the monomer mixture) structure, without being limited thereto.

In some embodiments, the rubber polymer may include, for example, diene rubbers, such as polybutadiene, poly(acrylonitrile-butadiene), and the like, saturated rubbers obtained by adding hydrogen to the diene rubbers, isoprene rubbers, C₂ to C₁₀ alkyl (meth)acrylate rubbers, copolymers of C₂ to C₁₀ alkyl (meth)acrylates and styrene, ethylene-propylene-diene terpolymer (EPDM), and the like. These may be used alone or as a mixture thereof. For example, the rubber polymer may include diene rubbers, (meth)acrylate rubbers, and the like, specifically butadiene rubbers, butyl acrylate rubbers, and the like.

In some embodiments, the rubber polymer (rubber particles) may have an average particle diameter of about 0.05 µm to about 2 µm, for example, about 0.15 µm to about 1 µm. Within this range, the thermoplastic resin composition can have good properties in terms of impact resistance, appearance characteristics, and the like. Here, the average (z-average) particle diameter of the rubber polymer (rubber particles) may be measured by a light scattering method in a latex state. Specifically, a rubber polymer latex is filtered through a mesh to remove coagulum generated during polymerization of the rubber polymer, followed by placing a mixed solution of 0.5 g of the latex and 30 ml of distilled water in a 1,000 ml flask, which in turn is filled with distilled water to prepare a specimen. Then, 10 ml of the specimen is transferred to a quartz cell, followed by measurement of the average particle diameter of the rubber polymer using a light scattering particle analyzer (Nano ZS, Malvern Co., Ltd.).

In some embodiments, the rubber polymer may be present in an amount of about 40 wt% to about 80 wt%, for example, about 50 wt% to about 70 wt%, based on 100 wt% of the rubber-modified vinyl graft copolymer, and the monomer mixture (comprising the aromatic vinyl monomer and the vinyl cyanide monomer) may be present in an amount of about 20 wt% to about 60 wt%, for example, about 30 wt% to about 50 wt%, based on 100 wt% of the rubber-modified vinyl graft copolymer. Within this range, the thermoplastic resin composition can exhibit good properties in terms of impact resistance, appearance characteristics, and the like.

In some embodiments, the aromatic vinyl monomer may be graft copolymerizable with the rubber polymer and may include, for example, styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and the like. These may be used alone or as a mixture thereof. The aromatic vinyl monomer may be present in an amount of about 10 wt% to about 90 wt%, for example, about 20 wt% to about 80 wt%, based on 100 wt% of the monomer mixture. Within this range, the thermoplastic resin composition can exhibit good properties in terms of processability, impact resistance, and the like.

In some embodiments, the vinyl cyanide monomer is copolymerizable with the aromatic vinyl monomer and may include, for example, acrylonitrile, methacrylonitrile, ethacrylonitrile, phenyl acrylonitrile, α-chloroacrylonitrile, fumaronitrile, and the like. These may be used alone or as a mixture thereof. For example, acrylonitrile, methacrylonitrile, and the like may be used. The vinyl cyanide monomer may be present in an amount of about 10 wt% to about 90 wt%, for example, about 20 wt% to about 80 wt%, based on 100 wt% of the monomer mixture. Within this range, the thermoplastic resin composition can exhibit good properties in terms of chemical resistance, mechanical characteristics, and the like.

In some embodiments, the monomer for imparting processability and heat resistance may include, for example, (meth)acrylic acid, C₁ to C₁₀ alkyl (meth)acrylate, maleic anhydride, N-substituted maleimide, and the like, without being limited thereto. The monomer for imparting processability and heat resistance may be present in an amount of about 60 wt% or less, for example, about 1 wt% to about 50 wt%, based on 100 wt% of the monomer mixture. Within this range, the monomer for imparting processability and heat resistance can impart processability and heat resistance to the thermoplastic resin composition without deterioration in other properties.

In some embodiments, the rubber-modified vinyl graft copolymer may include, for example, a copolymer (g-ABS) in which a styrene monomer as the aromatic vinyl compound, and an acrylonitrile monomer as the vinyl cyanide compound are grafted to a butadiene rubber polymer.

In some embodiments, the rubber-modified vinyl graft copolymer may be present in an amount of about 0.1 parts by weight to about 4 parts by weight, for example, about 1 part by weight to about 3 parts by weight, relative to about 100 parts by weight of the polycarbonate resin. If the content of the rubber-modified vinyl graft copolymer is less than about 0.1 parts by weight relative to about 100 parts by weight of the polycarbonate resin, the thermoplastic resin composition can suffer from deterioration in chemical resistance and the like, and if the content of the rubber-modified vinyl graft copolymer exceeds about 4 parts by weight, the thermoplastic resin composition can suffer from deterioration in insulating characteristics, flame retardancy, and the like.

### (C) Aromatic vinyl-vinyl cyanide copolymer resin

The aromatic vinyl-vinyl cyanide copolymer resin according to one embodiment of the invention may be applied to the polycarbonate resin together with the rubber-modified vinyl graft copolymer to improve properties of the thermoplastic resin composition, such as chemical resistance (acetic acid stress resistance), impact resistance, rigidity, insulating characteristics, flame retardancy, flowability, and the like, and may have a weight average molecular weight (Mw) of about 200,000 g/mol to about 400,000 g/mol, for example, about 250,000 g/mol to about 350,000 g/mol, as measured by gel permeation chromatography (GPC). If the weight average molecular weight of the aromatic vinyl-vinyl cyanide copolymer resin is less than about 200,000 g/mol, the thermoplastic resin composition can suffer from deterioration in chemical resistance, impact resistance, and the like, and if the weight average molecular weight thereof exceeds about 400,000 g/mol, the thermoplastic resin composition can suffer from deterioration in flowability (moldability) and the like.

In some embodiments, the aromatic vinyl-vinyl cyanide copolymer resin may be a polymer of a monomer mixture comprising an aromatic vinyl monomer and a vinyl cyanide monomer. For example, the aromatic vinyl-vinyl cyanide copolymer resin may be prepared by mixing an aromatic vinyl monomer, a vinyl cyanide monomer, and the like, followed by polymerization of the resulting mixture. Here, polymerization may be performed by any polymerization method known in the art, such as emulsion polymerization, suspension polymerization, bulk polymerization, and the like.

In some embodiments, the aromatic vinyl monomer may include, for example, styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and the like. These may be used alone or as a mixture thereof. The aromatic vinyl monomer may be present in an amount of about 60 wt% to about 90 wt%, for example, about 65 wt% to about 85 wt%, based on 100 wt% of the aromatic vinyl-vinyl cyanide copolymer resin. Within this range, the thermoplastic resin composition can exhibit good properties in terms of impact resistance, flowability, appearance characteristics, and the like.

In some embodiments, the vinyl cyanide monomer may include acrylonitrile, methacrylonitrile, ethacrylonitrile, phenylacrylonitrile, α-chloroacrylonitrile, fumaronitrile, and the like. These may be used alone or as a mixture thereof. For example, acrylonitrile, methacrylonitrile, and the like may be used. The vinyl cyanide monomer may be present in an amount of about 10 wt% to about 40 wt%, for example, about 15 wt% to about 35 wt%, based on 100 wt% of the aromatic vinyl-vinyl cyanide copolymer resin. Within this range, the thermoplastic resin composition can exhibit good properties in terms of impact resistance, flowability, heat resistance, appearance characteristics, and the like.

In some embodiments, the aromatic vinyl-vinyl cyanide copolymer resin may be present in an amount of about 0.5 parts by weight to about 4.5 parts by weight, for example, about 1 part by weight to about 4 parts by weight, specifically about 1.5 parts by weight to about 3.5 parts by weight, relative to about 100 parts by weight of the polycarbonate resin. If the content of the aromatic vinyl-vinyl cyanide copolymer resin is less than about 0.5 parts by weight relative to about 100 parts by weight of the polycarbonate resin, the thermoplastic resin composition can suffer from deterioration in chemical resistance, flowability, and the like, and if the content of the aromatic vinyl-vinyl cyanide copolymer resin exceeds about 4.5 parts by weight, the thermoplastic resin composition can suffer from deterioration in insulating characteristics, flame retardancy, and the like.

In some embodiments, the weight ratio of the rubber-modified vinyl graft copolymer to the aromatic vinyl-vinyl cyanide copolymer resin may range from about 1:0.5 to about 1:3, for example, about 1:0.7 to about 1:2.5. Within this range, the thermoplastic resin composition can exhibit good chemical resistance, insulating characteristics, and the like.

The thermoplastic resin composition according to one embodiment of the invention may further comprise additives used in a typical thermoplastic resin composition. The additives may include flame retardants, anti-dripping agents, antioxidants, lubricants, release agents, nucleating agents, stabilizers, antistatic agents, pigments, dyes, mixtures thereof, and the like, without being limited thereto. The additives may be present in an amount of about 0.001 parts by weight to about 40 parts by weight, for example, about 0.1 parts by weight to about 10 parts by weight, relative to about 100 parts by weight of the polycarbonate resin, without being limited thereto.

The thermoplastic resin composition according to one embodiment of the invention may be prepared in pellet form by mixing the above components, followed by melt extrusion of the resulting mixture at about 250°C to about 300°C, for example, at about 260°C to about 290°C, using a typical twin-screw extruder.

In some embodiments, the thermoplastic resin composition may have a flexural strength of about 280 MPa to about 600 MPa, for example, about 300 MPa to about 550 MPa, as measured on a specimen having a size of 100 mm × 100 mm × 1.5 mm at 2 mm/min in accordance with ISO 178 after deposition of 0.5 g of acetic acid onto the specimen.

In some embodiments, the thermoplastic resin composition may have a notched Izod impact strength of about 65 kgf·cm/cm to about 90 kgf·cm/cm, for example, about 68 kgf·cm/cm to about 88 kgf·cm/cm, as measured on a 1/8" thick specimen in accordance with ASTM D256.

In some embodiments, the thermoplastic resin composition may have a tensile strength of about 600 MPa to about 700 MPa, for example, about 610 MPa to about 680 MPa, as measured on a 4 mm thick specimen at 50 mm/min in accordance with ISO 527.

In some embodiments, the thermoplastic resin composition may have a flexural strength of about 850 MPa to about 950 MPa, for example, about 860 MPa to about 940 MPa, as measured on a 4 mm thick specimen at 2 mm/min in accordance with ISO 178.

In some embodiments, the thermoplastic resin composition may have a flexural modulus of about 20,000 MPa to about 25,000 MPa, for example, about 21,000 MPa to about 24,000 MPa, as measured on a 4 mm thick specimen at 2 mm/min in accordance with ISO 178.

In some embodiments, the thermoplastic resin composition may have a glow wire flammability index (GWFI) of about 790°C to about 900°C, for example, about 800°C to about 880°C, as measured on a 1.5 mm thick specimen at 850°C in accordance with UL746A.

In some embodiments, the thermoplastic resin composition may have a flame retardancy of V-2 or higher, as measured on a 3 mm thick specimen in accordance with a UL-94 vertical test method.

In some embodiments, the thermoplastic resin composition may have a melt-flow index (MI) of about 15 g/10 min to about 25 g/10 min, for example, about 16 g/10 min to about 22 g/10 min, as measured at 300°C under a load of 1.2 kgf in accordance with ISO 1133.

A molded article according to the present invention is produced from the thermoplastic resin composition as set forth above. The thermoplastic resin composition may be prepared in pellet form and may be produced into various molded articles (products) through various molding methods, such as injection molding, extrusion molding, vacuum molding, casting, and the like. These molding methods are well known to a person having ordinary skill in the art. The molded article has good properties in terms of chemical resistance (acetic acid stress resistance), impact resistance, rigidity, insulating characteristics, flame retardancy, flowability (moldability), property balance therebetween, and the like, and thus can be advantageously used for switch materials, charger materials, power boxes, and the like.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows:

### (A) Polycarbonate resin

A bisphenol-A polycarbonate resin (manufacturer: Lotte Chemicals Co., Ltd., weight average molecular weight (Mw): about 25,000 g/mol) was used.

### (B) Rubber-modified vinyl graft copolymer

A core-shell type graft copolymer (g-ABS, manufacturer: Lotte Chemical Co., Ltd.) prepared through graft copolymerization of 42 wt% of styrene and acrylonitrile (styrene/acrylonitrile: 75 wt%/25 wt%) to 58 wt% of butadiene rubber particles having an average particle size of 0.28 µm was used.

### (C) Aromatic vinyl-vinyl cyanide copolymer resin

(C1) Copolymer resin (SAN, manufacturer: Lotte Chemical Co., Ltd., weight average molecular weight: about 332,000 g/mol) prepared by polymerization of 75 wt% styrene and 25 wt% acrylonitrile was used.

(C2) A copolymer resin (SAN, manufacturer: Lotte Chemical Co., Ltd., weight average molecular weight: about 120,000 g/mol) prepared by polymerization of 75 wt% styrene and 25 wt% acrylonitrile was used.

(C3) A copolymer resin (SAN, manufacturer: BASF, weight average molecular weight: about 1,000,000 g/mol) prepared by polymerization of 75 wt% styrene and 25 wt% acrylonitrile was used.

### Examples 1 to 5 and Comparative Examples 1 to 6

The aforementioned components were mixed in amounts as listed in Tables 1 and 2, followed by extrusion at about 280°C, thereby preparing a thermoplastic resin composition in pellet form. Here, extrusion was performed using a twin-screw extruder (L/D: 36, diameter: 45 mm). The prepared pellets were dried at about 80°C for about 4 hours or more and then subjected to injection molding using a 6 oz. injection machine (molding temperature: about 280°C, mold temperature: about 60°C), thereby preparing a specimen. The prepared specimen was evaluated as to the following properties. Results are shown in Tables 1 and 2.

### Property evaluation

(1) Chemical resistance (acetic acid stress resistance): Flexural strength was measured on a specimen having a size of 100 mm × 100 mm × 1.5 mm at 2 mm/min in accordance with ISO 178 after deposition of 0.5 g of acetic acid onto the specimen.
(2) Notched Izod impact strength (unit: kgf·cm/cm): Notched Izod impact strength was measured on a 1/8" thick specimen in accordance with ASTM D256.
(3) Tensile strength (unit: MPa): Tensile strength was measured on a 4 mm thick specimen at 50 mm/min in accordance with ISO 527.
(4) Flexural strength (unit: MPa): Flexural strength was measured on a 4 mm thick specimen at 2 mm/min in accordance with ISO 178.
(5) Flexural modulus (unit: MPa): Flexural modulus was measured on a 4 mm thick specimen at 2 mm/min in accordance with ISO 178.
(6) GWFI (Glow Wire Flammability Index) (unit: °C): GWFI was measured on a 1.5 mm thick specimen at 850°C in accordance with UL 746A.
(7) Flame retardancy: Flame retardancy was measured on a 3 mm thick specimen in accordance with the UL-94 vertical test method.
(8) Melt-flow index (unit: g/10 min): Melt-flow index (MI) was measured at 300°C under a load of 1.2 kgf in accordance with ISO 1133.

**Table 1**

| | Example | | | | |
|---|---|---|---|---|---|
| | 1 | 2 | 3 | 4 | 5 |
| (A) (parts hv weight) | 100 | 100 | 100 | 100 | 100 |
| (B) (parts by weight) | 1 | 2 | 3 | 2 | 2 |
| (C1) (parts by weight) | 2.5 | 2.5 | 2.5 | 1.5 | 3.5 |
| (C2) (parts by weight) | - | - | - | - | - |
| (C3) (parts by weight) | - | - | - | - | - |
| Flexural strength after deposition of acetic acid | 300 | 350 | 370 | 320 | 510 |
| Notched Izod impact strength | 70.7 | 82.9 | 85.6 | 82.3 | 81.9 |
| Tensile strength | 620 | 620 | 620 | 620 | 640 |
| Flexural strength | 910 | 910 | 910 | 910 | 910 |
| Flexural modulus | 23,200 | 23,100 | 23,000 | 23,400 | 23,000 |
| GWFI | 850 | 850 | 800 | 850 | 850 |
| Flame retardancy | V-2 | V-2 | V-2 | V-2 | V-2 |
| Melt-flow index | 20.0 | 19.1 | 18.5 | 18.0 | 20.0 |

**Table 2**

| | Comparative Example | | | | | |
|---|---|---|---|---|---|---|
| | 1 | 2 | 3 | 4 | 5 | 6 |
| (A) (parts bv weight) | 100 | 100 | 100 | 100 | 100 | 100 |
| (B) (parts hv weight) | 0.05 | 5 | 2 | 2 | 2 | 2 |
| (C1) (parts bv weight) | 2.5 | 2.5 | 0.1 | 5.5 | - | - |
| (C2) (parts bv weight) | - | - | - | - | 3.5 | - |
| (C3) (parts bv weight) | - | - | - | - | - | 3.5 |
| Flexural strength after deposition of acetic acid | 150 | 450 | 150 | 550 | 250 | 560 |
| Notched Izod impact strength | 65.8 | 85.6 | 78.1 | 85.1 | 62.1 | 86.3 |
| Tensile strength | 620 | 620 | 620 | 620 | 620 | 650 |
| Flexural strength | 910 | 910 | 910 | 910 | 910 | 910 |
| Flexural modulus | 23,300 | 23,000 | 23,200 | 23,400 | 23,200 | 23,000 |
| GWFI | 850 | 750 | 850 | 775 | 850 | 850 |
| Flame retardancy | V-2 | HB | V-2 | HB | V-2 | V-2 |
| Melt-flow index | 20.5 | 18.0 | 14.1 | 21.0 | 24.4 | 13.5 |

From the above results, it can be seen that the thermoplastic resin compositions of the present invention have excellent properties in terms of chemical resistance (flexural strength after deposition of acetic acid), impact resistance (notched Izod impact strength), rigidity (tensile strength, flexural strength, flexural modulus), insulating characteristics (GWFI), flame retardancy, flowability (melt-flow index), property balance therebetween, and the like.

Conversely, it could be seen that the thermoplastic resin composition of Comparative Example 1 prepared using an insufficient amount of the rubber-modified vinyl graft copolymer suffered from deterioration in chemical resistance (acetic acid stress resistance) and the like, and the thermoplastic resin compositions of Comparative Example 2 prepared using an excess of the rubber-modified vinyl graft copolymer suffered from deterioration in insulating characteristics, flame retardancy, and the like. In addition, it could be seen that the thermoplastic resin composition of Comparative Example 3 prepared using an insufficient amount of the aromatic vinyl-vinyl cyanide copolymer resin suffered from deterioration in chemical resistance (acetic acid stress resistance), flowability, and the like, and the thermoplastic resin composition of Comparative Example 4 prepared using an excess of the aromatic vinyl-vinyl cyanide copolymer resin suffered from deterioration in insulating characteristics, flame retardancy, and the like. Further, it could be seen that the thermoplastic resin composition of Comparative Example 5 prepared using an aromatic vinyl-vinyl cyanide copolymer resin (C2) having a weight average molecular weight less than the range of the present invention instead of the aromatic vinyl-vinyl cyanide copolymer resin according to the present invention suffered from deterioration in chemical resistance (acetic acid stress resistance), impact resistance, and the thermoplastic resin composition of Comparative Example 6 prepared using an aromatic vinyl-vinyl cyanide copolymer resin (C3) having a weight average molecular weight exceeding the range of the present invention suffered from deterioration in flowability (moldability) and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the invention. The scope of the invention should be defined by the appended claims rather than by the foregoing description, and the claims and equivalents thereto are intended to cover such modifications and the like as would fall within the scope of the invention.

## Claims

1. A thermoplastic resin composition comprising:
about 100 parts by weight of a polycarbonate resin;
about 0.1 parts by weight to about 4 parts by weight of a rubber-modified vinyl graft copolymer; and
about 0.5 parts by weight to about 4.5 parts by weight of an aromatic vinyl-vinyl cyanide copolymer resin having a weight average molecular weight of about 200,000 g/mol to about 400,000 g/mol,
wherein the thermoplastic resin composition has a flexural strength of about 280 MPa to about 600 MPa, as measured on a specimen having a size of 100 mm × 100 mm × 1.5 mm at 2 mm/min in accordance with ISO 178 after deposition of 0.5 g of acetic acid onto the specimen.

2. The thermoplastic resin composition according to claim 1, wherein the polycarbonate resin has a weight average molecular weight of about 10,000 g/mol to about 50,000 g/mol.

3. The thermoplastic resin composition according to claim 1, wherein the rubber-modified vinyl graft copolymer is prepared through graft polymerization of a monomer mixture comprising an aromatic vinyl monomer and a vinyl cyanide monomer to a rubber polymer.

4. The thermoplastic resin composition according to claim 1, wherein the aromatic vinyl-vinyl cyanide copolymer resin is a polymer of a monomer mixture comprising about 60 wt% to about 90 wt% of an aromatic vinyl monomer and about 10 wt% to about 40 wt% of a vinyl cyanide monomer.

5. The thermoplastic resin composition according to claim 1, wherein the rubber-modified vinyl graft copolymer and the aromatic vinyl-vinyl cyanide copolymer resin are present in a weight ratio of about 1:0.5 to about 1:3.

6. The thermoplastic resin composition according to claim 1, wherein the thermoplastic resin composition has a notched Izod impact strength of about 65 kgf·cm/cm to about 90 kgf·cm/cm, as measured on a 1/8" thick specimen in accordance with ASTM D256.

7. The thermoplastic resin composition according to claim 1, wherein the thermoplastic resin composition has a tensile strength of about 600 MPa to about 700 MPa, as measured on a 4 mm thick specimen at 50 mm/min in accordance with ISO 527.

8. The thermoplastic resin composition according to claim 1, wherein the thermoplastic resin composition has a flexural strength of about 850 MPa to about 950 MPa, as measured on a 4 mm thick specimen at 2 mm/min in accordance with ISO 178.

9. The thermoplastic resin composition according to claim 1, wherein the thermoplastic resin composition has a flexural modulus of about 20,000 MPa to about 25,000 MPa, as measured on a 4 mm thick specimen at 2 mm/min in accordance with ISO 178.

10. The thermoplastic resin composition according to claim 1, wherein the thermoplastic resin composition has a glow wire flammability index (GWFI) of about 790°C to about 900°C, as measured on a 1.5 mm thick specimen at 850°C in accordance with UL746A.

11. The thermoplastic resin composition according to claim 1, wherein the thermoplastic resin composition has a flame retardancy of V-2 or higher, as measured on a 3 mm thick specimen in accordance with a UL-94 vertical test method.

12. The thermoplastic resin composition according to claim 1, wherein the thermoplastic resin composition has a melt-flow index (MI) of about 15 g/10 min to about 25 g/10 min, as measured at 300°C under a load of 1.2 kgf in accordance with ISO 1133.

13. A molded article produced from the thermoplastic resin composition according to any one of claims 1 to 12.
